**Europäisches Patentamt**

**European Patent Office**

**Office européen des brevets**

(19)

(11) Veröffentlichungsnummer : **0 363 409 B1**

## (12) EUROPÄISCHE PATENTSCHRIFT

(45) Veröffentlichungstag der Patentschrift :
**02.09.92 Patentblatt 92/36**

(51) Int. Cl.$^5$ : **F16J 15/06**

(21) Anmeldenummer : **88904968.0**

(22) Anmeldetag : **08.06.88**

(86) Internationale Anmeldenummer :
**PCT/EP88/00513**

(87) Internationale Veröffentlichungsnummer :
**WO 88/09890 15.12.88 Gazette 88/27**

(54) **EINGESCHRAUBTES VENTILGEHÄUSE.**

(30) Priorität : **10.06.87 DE 3719354**

(43) Veröffentlichungstag der Anmeldung :
**18.04.90 Patentblatt 90/16**

(45) Bekanntmachung des Hinweises auf die
Patenterteilung :
**02.09.92 Patentblatt 92/36**

(84) Benannte Vertragsstaaten :
**AT BE CH DE FR GB IT LI LU NL SE**

(56) Entgegenhaltungen :
**DE-A- 2 805 040**
**DE-C- 921 903**
**GB-A- 2 069 631**
**US-A- 3 285 631**

(56) Entgegenhaltungen :
**US-A- 3 893 477**
**Prospekt "Wege-Sitzventile WSE 2" der Firma Flutec**
**"Taschenbuch für Maschinenbau", Dubbels, 1955, 1. Band, S. 724**

(73) Patentinhaber : **HEILMEIER & WEINLEIN**
**Fabrik für Oel-Hydraulik GmbH & Co. KG**
**Streitfeldstrasse 25**
**W-8000 München 80 (DE)**

(72) Erfinder : **BRUNNER, Rudolf**
**Wankstrasse 23**
**W-8011 Baldham (DE)**

(74) Vertreter : **Patentanwälte Grünecker, Kinkeldey, Stockmair & Partner**
**Maximilianstrasse 58**
**W-8000 München 22 (DE)**

## Beschreibung

Die Erfindüng betrifft eine Verbindüng zwischen einem Einschraüb-Ventilgehäuse und einem metallischen Trägerkörper eines Hochdrück-Hydraülik-System der im Obergegriff des Patentansprüchs 1 angegeben Art.

Aus einem Prospekt Nr. 5.202.0/3.87 der Firma Flutec, D-6603 Sulzbath/Saar, "Wege-Sitzventile WSE 2" ist es bekannt, das ein Zuei-Wege-Sitzventil enthaltende Ventilgehäuse nach Art einer Patrone in die Stufenbohrung des als Block oder Gehäuse ausgebildeten Trägerkörpers einzuschrauben, in dem verschiedene Kanäle des Hydrauliksystems und Rohranschlüsse angeordnet sind. Die Stufenbohrung besitzt drei axial über kegelförmige Schultern abgesetzte, zylindrische Abschnitte und wird durch einen in Richtung der Bohrungsachse verlaufenden Pumpenkanal verlängert. Das Ventilgehause besitzt entsprechende zylindrische Abschnitte, von denen zwei in ringförmigen Nuten jeweils einen O-Ring aufnehmen. Die Abschnitte und die kegelförmigen Durchmesserstufen der Stufenbohrung benötigen eine Feinstbearbeitung ihrer Oberflächen, wobei zusätzlich sehr genau darauf zu achten ist, daß die Abschnitte und Durchmesserstufen zur Bohrungsachse koaxial sind. Die Feinstbearbeitung ist nicht nur für die Dichtwirkung der O-Ringe notwendig, sondern auch dafür, daß die O-Ringe beim Einführen und Verschrauben des Ventilgehäuses nicht beschädigt werden. Neben diesem hohen Herstellungsaufwand und der relativ komplizierten Montage beansprucht das Ventilgehäuse eine relativ große Einbaulänge, so daß es in dünnwandige Kolbenböden, Zylinderböden oder Gehäusewände nicht eingebaut werden kann Bei diesem Nerbindungsprinzip führen ünter Umständen Herstellungsungenauigkeiten, die Undithtigkeiten der Verbindung zur Folge haben, zu einer sehr hohen AusschuBquote bei den Trägerkörper bildenden Gehäusen oder Blöcken, die gerade die teuersten Komponenten des Hydrauliksystems sind. Ein Nachbearbeiten eines Ausschuß-Gehäuses oder -Blocks ist kaum möglich, weil dann die Dichtwirkung nicht mehr erreicht wird . Auch Reparaturen eines Gehäuses oder Blocks, in dem in der Stufenbohrung Undichtigkeiten auftreten, sind kaum möglich.

Bei einem aus der DE-A- 28 05 040 bekannten, in eine Gewindebohrung eingeschraubten, entsperrbaren Rücksthlagventil wird ein in einer Schulter des Ventilgehäuses zumindest halbseitig umfaßter O-Ring gegen die kegelformig ausgebildete Durchmesserstufe der Stufenbohrung gelegt. Die den O-Ring sichernde, umlaufende Stützrippe wird gegen die Durchmesserstufe angedrütkt, damit der O-Ring unter dem später auf ihm lastenden hydraulischen Druck nicht fließen kann. Die Abdichtung der Stufenbohrung nach außen wird durch die ineinandergreifenden Gewinde der Stufenbohrung und des Ventilgehäuses gewährleistet, wobei gegebenenfalls noch eine außenliegende, von einem Einschraubkopf am außenliegenden Ende des Ventilgehäuses niedergespannte Dichtung verwendet wird. Auch bei diesem Prinzip ist eine aufwendige Feinstbearbeitung der Innenwand der Stufenbohrung und der Durchmesserstufe erforderlich, um den O-Ring beim Einführen nicht zu beschädigen. Sollte an der Durchmesserstufe eine Undichtigkeit auftreten, die sich durch Auswechseln des O-Ringes nicht beheben läßt, so ist ein Nacharbeiten der Durchmesserstufe nur möglich, wenn das Ventilgehäuse nicht mit einem seine Einsthraubtiefe begrenzenden Schraubkopf eingeschraubt ist, weil sonst der O-Ring nicht mehr dichtend zur Anlage bringbar ist. Hohe Ausschußquoten aufgrund von Fertigungsungenauigkeiten ergeben sich auch hierbei.

Bei einer aus der US-A-3 285 631 bekannten Rohrverbindung für Tieftemperaturzwecke ist zwischen die stumpf gegeneinander gepreßten Rohrenden ein Weithmetallring mit einer Indium-Beschichtung zur Abdichtung eingesetzt. In der einzigen Dichtzone der Rohrverbindung wird der Weithmetallring durch die Gewindeanzugsspannung einer überwurfmutter axial verformt.

Der Erfindung liegt die Aufgabe zugrunde, eine Verbindung der eingangs genannten Art zu schaffen, die sich durch einen verringerten Herstellungsaufwand, durch leichte Montierbarkeit und Reparaturfreundlithkeit und durch eine geringe Einschraublänge für das Ventilgehäuse auszeichnet. Eine Verringerung des Herstellungsaufwandes soll aus der Reduzierung der Ausschußquote der Gehäuse oder Blöcke durch gemilderte Präzisionsanforderungen resultieren.

Die gestellte Aufgabe wird erfindungsgemäß mit den im kennzeichnenden Teil des Patentanspruchs 1 angegebenen Merkmalen gelöst.

Die durch die Gewindeanzugsspannung jeweils zwischen der Stützfläche und der Durchmesserstufe kaltverformten Weichmetallringe, die problemlos bei höthsten Drücken ohne zu fließen für eine einwandfreie Abdichtung sorgen, gleichen überraschenderweise infolge ihrer Verformbarkeit übergroße Verformungshübe, Fertigungstoleranzen und etwaige Fertigungsungenauigkeiten aus, wie z.B. außerhalb des Toleranzbereiches liegende Abweichungen im Abstand zwischen der Außenseite des Trägerkörpers und der Durchmesserstufe oder der Abstände zwischen den Abschnitten des Ventilgehäuses, auch dann, wenn sie gemeinsam zwischen beim Einschrauben des Gehäuses relativ zueinander verdrehten Flächen kaltverformt werden. Umgekehrt hemmen sie bei ihrer Kaltverformung die Drehbewegung des Gehäuses bei weitem nicht in dem zu erwartenden Maß. Jeder Ring verformt sich soweit es zur Kompensation von Maßungenauigkeiten und für die notwendige Dichtwirkung des anderen Ringes notwendig ist. d.h., die lokal getrennten Ringe kooperieren bis zur einwandfreien Abdichtung in allen Dichtzonen miteinander. Es braucht ferner keine besondere Sorgfalt auf die Oberflächenqualität der Wandabschnitte der Stufenbohrung aufgebracht zu werden, weil die Weichmetallringe ihre Dichtwirkung zwischen der Durchmesserstufe und der Stützfläche am Ventilgehäuse entfalten. Aus diesen Gründen können sowohl Trägerkörper als auch Ventilgehäuse auch dann ihrer Zweckbestimmung entsprechend genutzt werden, wenn sie in herkömmlichen Verbindungen bereits Ausschuß gewesen wären. Die Montage ist einfach, da der Verformungswiderstand der Weithmetallringe bekannt ist und nur ein bestimmtes Anzugsmoment für das Ventilgehäuse eingehalten werden muß, bei dem die Abdichtung sichergestellt ist. Reparaturen in der Stufenbohrung sind genauso möglich wie am Ventilgehäuse selbst, weil ein Nacharbeiten der Durchmesserstufe und/oder der Stützfläche am Ventilgehäuse mit einfachen Werkzeugen möglich ist, und weil sich ein neuer Weichmetallring infolge seines großen axialen Kompensationsbereichs wieder an die neuen Gegebenheiten anzupassen vermag. Jeder Weichmetallring im Inneren der Stufenbohrung läßt sich nämlich ohne Einbuße bei der Dichtwirkung über einen relativ großen axialen Bereich verformen, wodurch Abweichungen im Abstand von der Durchmesserstufe zur freien Außenseite des Trägerkörpers oder in der Länge des Ventilgehäuses kompensiert werden. Die Einbaulänge des Ventilgehäuses wird wünschenwert kurz.

Weichmetallringe als Dichtelemente sind zwar auf anderen Gebieten der Technik, "Taschenbuch für Maschinenbau" (Dubbels, 1955, 1. Band, S. 724) bekannt; dort wird aber jeweils ein Ring allein und nicht im Zusammenwirken mit einem weiteren Weichmetallring eingesetzt. Ferner liegt jeweils der Weichmetallring zwischen geradlinig aufeinanderdrückenden Flächen die beim Gegeneinanderziehen nicht relativ zueinander verdreht werden dürfen. Als Einzeldichtung eingesetzt, kann ein Weichmetallring die Fähigkeit zur Kompensation von Toleranzen bei Beibehalt der Abdichtung nicht nennenswert ausspielen.

Zweckmäßig sind gemäß Ansprüch 2 bestimmte Materialien für Ringe, die jedoch nur eine Auswahl aus einer großen Zahl möglicher Materialien darstellen. Wichtig ist daß der Weichmetallring eine Konsistenz und Festigkeit hat, die im Vergleich zu den Festigkeiten des Trägerkörpers und des Ventilgehäuses nur so hoch ist, daß die Gewindeverbindung zwischen dem Trägerkörper und dem Ventilgehäuse nicht über Gebühr strapaziert wird, wenn der Weichmetallring in der bestimmungsgemäßen Weise kaltverformt wird.

Eine alternative Ausführungsform enthält einen weichen Kern in einem Mantel. Es läßt sich auf diese Weise eine gezielte Weicheit und Kaltverformbarkeit der Weichmetallringe einstellen, die nur so weit verformbar sind, daß sie unter den aufzunehmenden hydraulischen Drücken nicht selbsttätig fließen und keine nennenswerten Eindrücke in den klemmenden Flächen erzeugen.

Zweckmäßig ist ferner ein quadratischer Ringquerschnitt, weil derartige Weichmetallringe in vielen Größen handelsüblich und dabei preiswert sind. Der Ringquerschnitt spielt eine eher untergeordnete Rolle, weil er durch die Kaltverformung ohnedies verändert wird. Es könnten genauso gut kreisrunde oder ovale Ringquersthnitte benutzt werden.

Zueckmäßig sind ferner bestimmte Materialien des Trägerkörpers die eine ausreichende Anzugsspannung der ineinandergreifenden Gewinde einerseits und eine ausreichende Widerstandsfähigkeit der Auflageflächen für die Weichmetallringe andererseits gewährleisten.

Zwetkmäßig ist eine besondere Einspannung der Ringe, weil diese konstruktiv mit der materialspezifischen Kaltverformbarkeit der Weichmetallringe korrespondiert, insofern, als sich jeder Weichmetallring unter Anpressen an die kegelige Fläche leicht und über einen relativ großen Bereich in Richtung der Bohrungsachse verformen läßt, wobei bereits nach einem relativ geringen axialen Verformungsweg eine große Abdichtfläche entsteht. Mit dem quadratischen Ringquerschnitt liegt der Weichmetallring zunächst mit einer Kante an der Kegelfläche an, ehe er unter der Anzugsspannung mit zunächst relativ geringem Widerstand kaltverformt wird, bis die Kante zu einem gut dichtenden Wulst verformt wird. Dabei kann der Weichmetallring sogar der Kegelfläche entlang gleiten, um den axialen Bereich zu vergrößern, innerhalb dessen er die eingangs erwähnten Toleranzabweichungen oder Fertigungsungenauigkeiten in axialer Richtung kompensiert.

Bei einer weiteren Ausführungsform liegen an ein und derselben Durchmesserstufe zwei Weichmetallringe an, die miteinander für eine besonders wirksame Abdichtung auch bei hohen Druckdifferenzen zwischen den aneinander angrenzenden Bereichen in der Stufenbohrung sorgen. Mit dieser Ausbildung wird eine erhöhte Sicherheitsfunktion erreicht, weil selbst bei einer Undichtigkeit an einem Weichmetallring der andere noch für die notwendige Dichtheit sorgt.

Eine wichtige Ausführungsform ist für Anwendungsfälle brauchbar, bei denen zusätzlich zu den Arbeitsanschlüssen zur Stufenbohrung noch ein Hilfssteuerkanal oder ein Anschluß für eine Zusatzfunktion des im Ventilgehäuse untergebrachten Ventils benötigt werden. Bei bekannten, eingeschraubten Ventilgehäusen ist hierfür kein Platz vorhanden. Erfindungsgemäß wird hingegen auf einfache Weise auf engstem Raum ein zusätzlicher Anschluß zur Stufenbohrung untergebracht, von anderen getrennt und damit eine zusätzliche Funktion für das im Ventilgehäuse enthaltene Ventil erzielt. Weil beide an derselben Durchmesserstufe anliegenden Ringe zwischen sich eine abgedichtete Ringkammer begrenzen, läßt sich in die Ringkammer die Mündung wenigstens eines Steuerkanals zur Stufenbohrung Legen, während im Ventilgehäuse ein mit dieser Zone ausgerichteter Durchgang vorgesehen wird. Dies ist beispielsweise für entsperrbare Rückschlagventile oder für vorgesteuerte und zusätzlich entlastbare Sicherheitsventile ein wichtiger Aspekt, insbesondere wenn die zusätzliche Funktion eine Vergrößerung der Einbaulänge oder Änderung der Konstruktion des Ventilgehäuses benötigt wird. Wird hingegen in die Stufenbohrung ein Ventilgehäuse eingeschraubt, dessen Ventil diese zusätzliche Funktion nicht benötigt, so spielt dies keine Rolle, weil die Ringkammer abgeschlossen ist. Das Prinzip, zwei Ringe an derselben Durchmesserstufe abdichtend abzustützen und dazwischen einen Steuerkanal einmünden zu lassen, kann auch bei eingeschraubten Ventilgehäusen benutzt werden, die nicht mit Weichmetallringen sondern auf herkömmliche Weise abgedichtet sind. Die beiden Weichmetallringe sind trotz der knappen Hintereinanderschaltung axial so weit verformbar, daß jeder für sich die gewünschte Dichtwirkung erbringt.

Bei einer weiteren Ausführungsform mit einem unter einem Einschraubkopf liegenden Außendichtelement wird auch das Problem, die Abdichtung der Stufenbohrung nach außen zu erreichen, auf einfache Weise gelöst. Die im Inneren der Stufenbohrung vorgesehenen Weichmetallringe schaffen die Voraussetzungen eines relativ großen axialen Bewegungsbereiches des eingeschraubten Gehäuses, innerhalb dessen sich der außenliegende Weichmetallring für die von ihm erwartete Dichtwirkung niederspannen läßt. Auch nach einem Austausch des Ventilgehäuses, z.B. bei einer Reparatur, brauchen nur die Weichmetallringe durch neue ersetzt zu werden, damit die geforderte Abdichtung wieder erreicht wird, selbst wenn die Durchmesserstufe und/oder die äußere Auflagefläche um einige Zehntelmillimeter nachgearbeitet wurden.

Obwohl bei zur Bohrungsachse senkrechten Flächen zum Klemmen der Weichmetallring als Außendichtelement nicht in dem Maß axial verformbar ist, wie der im Inneren der Stufenbohrung angeordnete, der sich an der kegeligen Auflagefläche abstützt, reicht dies für die Dichtheit aus. Der innenliegende Weichmetallring ist jedoch unter Beibehalt der Dichtwirkung so weit axial verformbar, daß der unterhalb des Schraubkopfes liegende Weithmetallring zur einwandfreien Abdichtung ausreichend fest eingespannt werden kann.

Bei einer weiteren Ausführungsform wird dem im Inneren der Stufenbohrung Liegende Weichmetallring zwischen den senkrecht zur Bohrungsachse liegenden Stützflächen eine geringere axiale Verformbarkeit zugebilligt, jedoch ist der außenliegende Weichmetallring an der kegeligen Stützfläche über einen größeren axialen Bereich verformbar. Die im Inneren der Stufenbohrung vorgesehenen, zur Bohrungsachse senkrechten Stützflächen bringen gegebenenfalls herstellungstethnische Vorteile.

Wenn jeder Weithmetallring am Gehäuse lagegesichert ist, wird die Montage des Ventilgehäuses in der Stufenbohrung erleichtert. Gleichzeitig wird durch diese Form der Umfangsfläche und die umlaufende Nut zusätzlicher Raum für die Verformung jedes Weithmetallrings unter der Anzugsspannung bereitgestellt, und auch dafür gesorgt, daß jeder kaltverformte Weichmetallring eine große Berührungsfläche mit dem Ventilgehäuse hat.

Eine Schneidkante am Einschraubkopf sorgt auf einfache Weise für eine zuverlässige Abdichtung, selbst dann, wenn das Ventilgehäuse mehrfach ein- und herausgesthraubt wird. Die Fähigkeit der im Inneren der Stufenbohrung liegenden Weichmetallringe, relativ große axiale Verformungen ohne Verschlethterung der Dichtwirkung aufzunehmen, läßt es nämlich zu, die Schneidkante jeweils so weit in die Auflagefläche am Trägerkörper einzudrücken, bis die gewünschte Abdichtung entsteht. Es ist nur dafür zu sorgen, daß die Weichmetallringe eine axiale Erstreckung aufweisen, bei der sie bereits einer Kaltverformung zwischen den belastenden Flächen unterworfen werden, wenn die Schneidkante noch nicht vollständig in die Auflagefläche eingedrungen ist. Mit anderen Worten beginnt die Kaltverformung der in der Stufenbohrung untergebrachten Weichmetallringe voreilend zum Einschneiden der Schneidkante bzw. Niederspannen des Außendichtelementes.

Schließlich läßt sich bei einer weiteren Ausführungsform bei sehr geringer Einschraubtiefe des Ventilgehäuses die zusätzliche Funktion der hydraulischen Entlastung des Sicherheits-Sitzventils unterbringen.

Anhand der Zeichnung werden Ausführungsformen des Erfindungsgegenstandes erläutert. Es zeigen:

Fig. 1 eine erste Ausführungsform eines in eine Stufenbohrung eingeschraubten Ventilgehäuses, in der oberen Hälfte im Axialsthnitt der Stufenbohrung, in der unteren Hälfte als Axialschnitt des Ventilgehäuses,

Fig. 2 eine ähnliche Schnittdarstellung einer weiteren Ausführungsform,

Fig. 3 die Ausführungsform von Fig.2 im Detail,

Fig. 4 einen Teilschnitt einer weiteren Ausführungsform,

Fig. 5 einen Axialschnitt einer Detailvariante,

Fig. 6 einen Teilschnitt einer weiteren Ausführungsform, und

Fig. 7 einen Axialschnitt einer weiteren Ausführungsform, wobei die obere Hälfte im Detail von der unteren Hälfte abweicht.

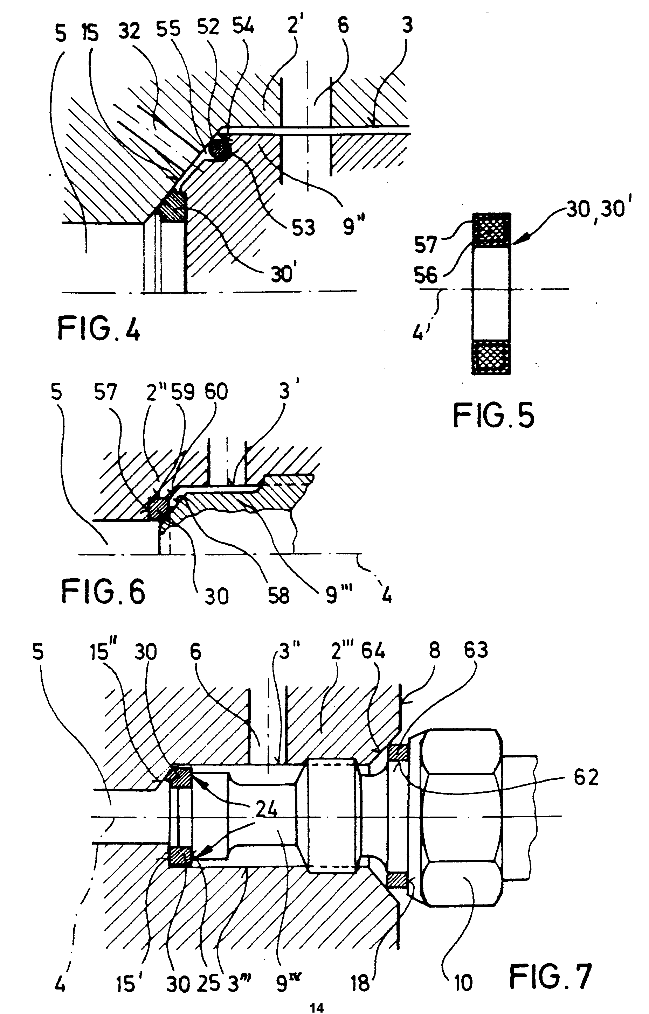

Die Ausführungsformen nach den Figuren 4,6 und 7 sind von der Erfindung nicht betroffen.

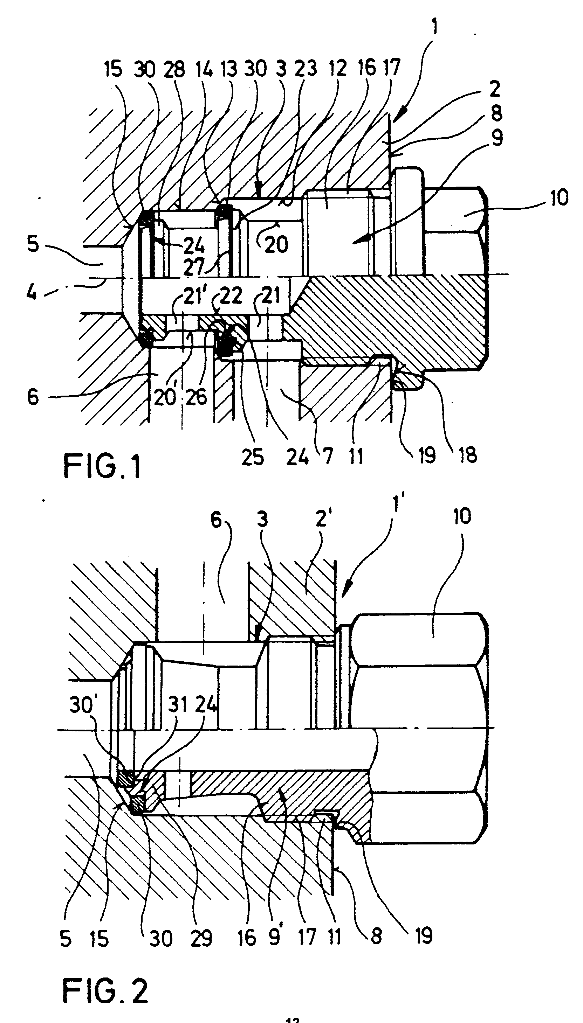

Von einer hydraulischen Steuervorrichtung 1 eines Hochdrutk-Hydraulik-Systems ist in Fig. 1 ein Teil eines metallischen Trägerkörpers 2 erkennbar, der eine Stufenbohrung 3 mit einem eingeschraubten Ventilgehäuse 9 aufweist. Der Trägerkörper 2 kann beispielsweise ein Gehäuse oder ein BLock sein, der Kanäle und Leitungsanschlüsse sowie Befestigungseinrichtungen für die Steuervorrichtung 1 aufweist (nicht gezeigt). Der Trägerkörper 2 könnte aber auch der Boden eines Kolbens, eines Zylinders oder eine Gehäusewand sein, in die das Ventilgehäuse 9 eingeschraubt ist. Das Ventilgehäuse 9 enthält nicht dargestellte Komponenten eines für den jeweiligen Fall konzipierten Ventils, z.B. eines Rücksthlagventils, eines Pilotventils, eines Vorsteuerventils, eines Sicherheitsventils, eines Magnetventils, eines Proportionalventils oder dgl.

In Richtung der mit 4 bezeichneten Bohrungsachse wird Stufenbohrung 3 durch einen im Durchmesser kleineren Kanal 5 verlängert. Seitlich mündet angrenzend an den Kanal 5 ein weiterer Kanal 6 und angrenzend an diesen ein weiterer Kanal 7 in die Stufenbohrung 3. Der Trägerkörper 2 besitzt um das freie Ende der Stufenbohrung 3 eine ebene Auflagefläche 8.

Das Ventilgehäuse 9 ist mit einem Einschraubkopf 10 versehen, der jedoch nicht notwendigerweise einstückig mit dem Ventilgehäuse 9 verbunden sein muß. In einen zylindrischen Abschnitt 12 ist nahe dem außenliegenden Ende der Stufenbohrung 3 ein Innengewinde 11 eingeschnitten. In den Abschnitt 12 mündet der Kanal 7. über eine als kegelförmige Fläche ausgebildete Durchmesserstufe 13 schließt sich an den Abschnitt 12 ein zylindrischer Abschnitt 14 mit kleinerem Durchmesser an. Dieser ist über eine ebenfalls kegelförmige Durchmesserstufe 15 in den Kanal 5 übergeführt.

Das Ventilgehäuse 9 besitzt einen Abschnitt 16 mit einem Außengewinde 17, das in das Innengewinde 11 mit einer bestimmten Anzugsspannung eingeschraubt ist. Der Einschraubkopf 10 weist unterseitig eine Auflagefläche 18 auf, die bei dieser Ausführungsform mit einer umlaufenden Schneidkante 19 versehen ist. Im Anschluß an den Abschnitt 16 des Ventilgehäuses 9 ist ein eingezogener zylindrischer Bereich 20 vorgesehen, der in Umfangsrichtung verteilte Durchlässe 21 zu einem im Inneren des Gehäuses 9 liegenden Raum 22 aufweist. An den Abschnitt 20 schließt sich eine flanschförmige Verdickung 23 an, die eine dem Kanal 5 zugewandte, im Querschnitt winkelförmige Schulter 24 aufweist. Die Schulter 24 wird von einer zur Bohrungsachse 4 senkrechten Stützfläche 25 und einer sich in Richtung der Bohrungsachse 4 zum Kanal 5 hin schwach verjüngenden, kegeligen Umfangsfläche 26 begrenzt. Zwischen der Stützfläche 25 und der Umfangsfläche 26 ist eine umlaufende, schmale Nut 27 vorgesehen.

Über einen weiteren Abschnitt 20′ mit über den Umfang verteilten Durchlässen 21′ folgt eine weitere, flanschförmige Verdickung 28, die eine weitere Schulter 24 in der vorewähnten Ausbildung besitzt.

In den Schultern 24 der Verdickungen 23 und 28 ist jeweils ein Dichtelement 30 in Form eines Weichmetallringes lagegesichert. Der Ringquerschnitt des Weichmetallrings ist annähernd quadraticth mit zur Bohrungsachse 4 annähernd koaxialen Außen- und Innenumfangsflächen. Die Bemessung des Ringquerschnitts ist z.B. so gewählt, daß die außenliegende Kante des Querschnitts über den Außenumfang der Verdickung 23 bzw. 28 deutlich übersteht. Ferner ist der Querschnitt jedes Dichtelementes 30 so bemessen, daß beim Einschrauben des Ventilgehäuses 9 die beiden Weichmetallringe schon an den Durchmesserstufen 15 bzw. 13 anliegen, ehe die Schneidkante 19 in die Auflagefläche 8 eindringt. Dadurch wird erreicht, daß mit Eindringen der Schneidkante 19 in die Auflagefläche 8 die Weichmetallringe an den Durchmesserstufen 15 und 13 so weit kaltverformt werden, daß der Kanal 5 gegenüber dem Kanal 6, der Kanal 6 gegenüber dem Kanal 7, und dieser über die Schneidkante 19 gegen die äußere Umgebung abgedichtet werden. Fertigungsungenauigkeiten oder Toleranzen in den axialen Abständen zwischen der Auflagefläche 8 und den Durchmesserstufen 13 und 15 sowie zwischen der Auflagefläche 18 und den Stützflächen 25 der Schultern 24 der Verdickungen 23 und 28 werden dadurch kompensiert, daß die Dichtelemente 30, d.h. die dort vorgesehenen Weichmetallringe, entsprechend mehr oder weniger verformt werden. Dank der Anlage der Weichmetallringe an den kegelig ausgebildeten Durchmesserstufen 15 und 13, deren Kegelwinkel annähernd 120° beträgt, lassen sich diese ohne Beeinflussung der Dichtwirkung über relativ große axiale Bereiche verformen.

Ist das Ventilgehäuse 9 vom Einschraubkopf 10 getrennt, so wird zunächst nur das Ventilgehäuse 9 eingeschraubt, bis die beiden Dichtelemente 30 entsprechend verformt sind. Der Einschraubkopf 10 wird dann bis zum Erreichen der erforderlichen Dichtwirkung der Schneidkante 19 eingeschraubt. Die Weichmetallringe im Inneren der Stufenbohrung 3 gleichen auch Fluchtungsfehler der Abschnitte 12 und 14 bzw. der Durchmesserstufen 13 und 15 in bezug auf die Bohrungsachse 4 aus, so daß auch solche Fertigungsungenauigkeiten kompensiert werden.

Ist es erforderlich, eine im Betrieb der Steuervorrichtung 1 aufgetretene Undichtigkeit zwischen den Kanälen 5 und 6 bzw. zwischen den Kanälen 6 und 7 oder zwischen dem Kanal 7 und der Außenseite des Trägerkörpers 2 zu beseitigen, so werden das Ventilgehäuse 9 herausgesthraubt und die Durchmesserstufe 15 oder 13 oder die Auflagefläche 8 nachbearbeitet, was mit einfachen Werkzeugen geschehen kann, ehe das Ventilgehäuse 9 unter Verwendung neuer Weichmetallringe wieder eingeschraubt wird. Sollte es vorhersehbar sein, daß aufgrund der Nachbearbeitung der unverformte Querschnitt der Weichmetallringe nicht für eine ausreichende Verformung unter der Anzugsspannung ausreichen wird, so werden ensprechend axial höhere Weichmetallringe eingesetzt, um wieder die gewünschte Abdichtwirkung erzielen zu können. Es braucht weder der Trägerkörper 2 noch das Gehäuse 9 bei solchen Reparaturen ausgewechselt oder weggeworfen zu werden.

Bei der Ausführungsform von Fig. 2 ist in einen Trägerkörper 2' einer anderen hydraulischen Steuervorrichtung 1' ein anderes Ventilgehäuse 9' in die Stufenbohrung 3 eingeschraubt. Im Trägerkörper 2' sind nur die Kanäle 5 und 6 vorgesehen. Am Ventilgehäuse 9' ist vor dem Abschnitt 16 eine flanschförmige Verdickung 29 vorgesehen, die außen die zu Fig. 1 erläutete Schulter 24 für ein Dichtelement 30 in Form eines Weichmetallringes aufweist sowie eine radial weiter innen liegende Schulter 31 für ein Dichtelement 30' in Form eines im Querschnitt dem Dichtelement 30 annähernd gleichen Weichmetallringes. Beide Dichtelemente 30 und 30' liegen an derselben Durchmesserstufe 15 mit gegenseitiger radialer und axialer Versetzung an. Sie werden durch die Anzugsspannung, aufgebracht beispielsweise durch den Schraubkopf 10, so weit kaltverformt, daß sie den Kanal 5 gegenüber dem Kanal 6 abdichten. Mit dieser Doppelanordnung der Dichtelemente 30, 30' wird eine verbesserte Sicherheitsfunktion bei der Abdichtung erreicht. Die beiden, an der kegeligen Durchmesserstufe 15 mit einem Kegelwinkel von annähernd 120° anliegenden Dichtelemente 30, 30' sind , da sie Weichmetallringe sind, in der Lage, etwaige axiale Fertigungsungenauigkeiten oder Toleranzen auszugleichen und trotzdem sowohl gemeinsam als auch jeweils für sich die erforderliche Abdithtwirkung aufzubringen.

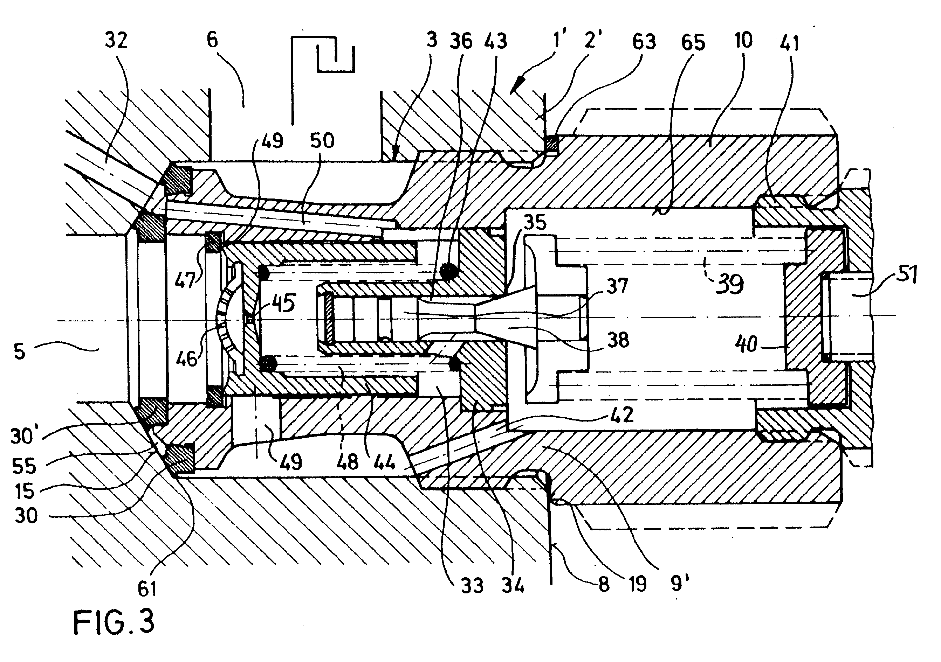

In Fig. 3 ist das Abdichtprinzip der Verbindung von Fig. 2 in der Anwendung bei einem vorgesteuerten und zusätzlich hydraulischen entlastbaren Sicherheits-Sitzventil gezeigt. Im Hinblick auf die zusätzliche Funktion der Entlastbarkeit ist im Trägerkörper 2' ein Entlastungs-Steuerkanal 32 gebohrt, der im Bereich der Durchmesserstufe 15 zwischen den beiden Dichtelementen 30, 30' einmündet. Im vorliegenden Fall ist dieser Kanal 32 normalerweise abgesperrt. Nur für den Fall, daß das Sicherheitsventil schlagartig entlastet werden soll, wird der Steuerkanal 32 druckentlastet.

Im Ventilgehäuse 9', das mittels des Einschraubkopfes 10 unter Einschneiden der Schneidkante 19 in die Auflagefläche 8 eingeschraubt ist, bis beide Dichtelemente 30, 30' unter Kaltverformung an der Durchmesserstufe 15 (beim Verformen entstehende Wulste 61 sind angedeutet) ihre Abdichtfunktion erbringen, ist eine längsverlaufende zylindrische Kammer 33 ausgebildet, in die ein im Querschnitt T-förmiger Einsatzteil 34 eingeschraubt ist, der einen Auslaßventilsitz 35 aus einer über Durchgänge 43 mit der Kammer 33 verbundener Kammer 36 aufweist. In der Kammer 36 ist ein Dämpfungskolben 37 versthiebbar, der an einem Ende ein Federwiderlager und ein kegelförmiges Schließelement 38 trägt, das mit dem Auslaßventilsitz 35 in Form eines Vorsteuerventils zusammenarbeitet. Eine Feder 39 drückt das Schließelement 38 auf den Auslaßventilsitz 35 und stützt sich an einem weiteren Widerlager 40 ab, das in einer in den Einschraubkopf 10 eingeschraubten Mutter 41 mittels einer Gewindespindel 51 axial verstellbar ist. Der Einschraubkopf 10 enthält eine Kammer 65, die über einen Kanal 42 mit dem Abschnitt der Stufenbohrung 3 in Strömungsverbindung steht, der über den Kanal 6 an einen Tank angesthlossen ist. Im Kanal 5 steht der abzusichernde Druck an.

In der Kammer 33 des Ventilgehäuses 9' ist ein Kolben 44 abgedichtet gegen eine Feder 48 versthiebbar, die sich am Einsatzteil 34 abstützt. Der Kolben 44 enthält eine Blende 45, die nach außen durch ein Sieb 46 abgedeckt ist. Ferner trägt der Kolben 44 ein umlaufendes Schließelement 49, das mit einem im Ventilgehäuse 9' lagegesicherten Sitzring 47 als Sicherheitsventil zusammenarbeitet. Die Dichtelemente 30, 30' begrenzen eine gegenüber den Kanälen 5 und 6 abgedichtete Ringkammer 55, von der ein Kanal 50 zur Kammer 33 des Ventilgehäuses 9' führt.

In der oberen Hälfte von Fig. 3 ist angedeutet, daß anstelle der Schneidkante 19 des Einschraubkopfes 10 auch ein Außendichtelement 63 in Form eines Weichmetallringes vorgesehen sein kann, das zwischen zur Bohrungsachse senkrechten Stützflächen eingespannt ist, und zwar mit der Maßgabe, daß die Dichtelemente 30, 30' bei Erreichen der Dichtwirkung am Dichtelement 63 schon so weit verformt sind, daß sie die Ringkammer 55 gegenüber den Kanälen 5 und 6 abdichten.

Das Sicherheitsventil arbeitet wie folgt:

Bis zum Erreichen einer bestimmten Druckgrenze im Kanal 5 ist das Sicherheitsventil 49, 47 gesthlossen. Der herrschende Druck gelangt durch die Blende 45 in die Kammer 33 und belastet den Kolben 44 zusammen mit der Feder 48 im Schließsinn. GLeichzeitig lastet dieser Druck über die Durchgänge 43 am Schließelement 38, das von der Feder 39 in der zum Tank entlasteten Kammer 65 geschlossen gehalten wird, und zwar nach Maßgabe der Vorspannung der Feder 39, die mit der Spindel 51 eingestellt werden kann.

Steigt der Druck im Kanal 5 über die, z.B. mit der Spindel 51 eingestellte Druckgrenze, so hebt das Schließelement 38 vom Auslaßventilsitz 35 ab, wobei so viel Druckmittel in die Kammer 65 und von dieser über den Kanal 42 zum Tank abfließt, daß die eingestellte Druckgrenze gehalten wird. Bei stärkerem Druckanstieg wird der Kolben 44 mit dem Schließelement 49 vom Sitzring 47 abgehoben; Druckmittel strömt dann direkt zum Tank an. In den Kanälen 50 und 32 und in der Ringkammer 55 herrscht jeweils der Druck der Kammer 33, weil der Steuerkanal 32 abgesperrt ist. Wird eine schlagartige Entlastung benötigt, so wird der Steuerkanal 32 geöffnet, der Druck in der Kammer 33 bricht zusammen, das Sicherheitsventil 49, 47 öffnet weit und unabhängig vom Vorsteuerventil 35, 38 . Der Druck im Kanal 5 sinkt bis auf eine Höhe, die durch die Kraft der Federn 48 und 39 bestimmt ist. Sobald der Steuerkanal 32 wieder abgesperrt wird, nimmt das Sicherheitsventil seine normale Funktion wieder auf.

Fig. 4 verdeutlicht eine Detailvariante zu Fig. 3, bei der die Ringkammer 55 innen durch das Dichtelement 30' in Form eines Weichmetallringes und außen durch einen herkömmlichen, elastischen Dichtring 52, z.B. einen O-Ring, gegenüber den Kanälen 5 und 6 abgedichtet wird. Zu diesem Zweck ist in den Ventilkörper 9″ eine umlaufende, U-förmige Stütznut 53 für den Dichtring 52 eingearbeitet, die außen durch eine vorstehende Stützkante 54 begrenzt wird, die unter der Anzugsspannung des Ventilkörpers 9″ bis zur Anlage an der Durchmesserstufe 15 bewegt wird und sich gegebenenfalls sogar in diese eingräbt. Diese axiale Bewegung der Stützkante 54 wird durch das Dichtelement 30', d.h. den Weithmetallring, zugelassen, der sich an der Durchmesserstufe 15 verformt. Die Stützkante 54 verhindert, daß der O-Ring 52 unter dem hydraulischen Druck fließt.

Bei der Detailvariante der Dichtelemente 30, 30' gemäß Fig. 5, das bei den vorhergehend erläuterten Ausführungsformen verwendet werden kann, ist kein durchgehend massiver Aufbau sondern ein elastischer oder zäh-elastischer Kern 56 vorgesehen, der allseits von einem Weichmetallmantel 57 eingeschlossen wird. Bei dieser Ausbildung wird eine gute Verformbarkeit des Dichtelementes 30, 30' und trotzdem die Sicherheit erreicht, daß das verformte Dichtelement unter dem hydraulischen Druck, nicht fließt. Wie bereits erwähnt, spielt die Querschnittsform des Dichtelementes 30, 30' nur eine nebengeordnete Rolle. Es könnte deshalb durchaus ein von einer quadratischen Form für den Weithmetallmantel 57 und den Kern 56 abweichende Qerschnittsgestalt gewählt werden.

Bei den Ausführungsformen der Fig. 1 bis 4 liegt das Dichtelement 30, 30' in der Stufenbohrung 3, 3' an einer kegeligen Durchmesserstufe 13, 15 an und ist durch das Gehäuse 9, 9', 9″ über eine zur Bohrungsachse 4 senkrechte Stützfläche, z.B. 25, durch die Anzugsspannung beaufschlagt. Die kegelige Fläche der Durchmesserstufe hat den Vorteil, daß sich der Weichmetallring in axialer Richtung über einen relativ großen Bereich verformen kann. Fig. 6 verdeutlicht hingegen, daß das Dichtelement 30, ein Weithmetallring an der Durchmesserstufe der Stufenbohrung 3' zwischen einer zur Bohrungsachse 4 senkrechten Stützfläche 57 und einer entsprechend der Umfangsfläche 26 (Fig. 1) ausgebildeten Umfangsfläche 59 lagegesichert sein kann, während das Ventilgehäuse 9‴ eine kegelförmige Stützfläche 58 aufweist, die am Dichtelement 30 anliegt. Hierbei wird ebenfalls der axiale Kaltverformungsbereich bei verhältnismäßig gleichbleibender Anzugsspannung des eingeschraubten Ventilgehäuses 9 ‴ erreicht. Zweckmäßigerweise ist zum Einführen des Dichtelementes 30 im Anschluß an die Umfangsfläche 59 eine kegelförmige Schulter 60 vorgesehen. Denkbar wäre es ferner den Weithmetallring jeweils zwischen zwei annähernd zueinander parallelen Kegelflächen zu verformen, damit ein sehr großer axialer Verformungsbereich mit gleichbleibender Dichtwirkung erreicht wird.

Bei der Ausführungsform gemäß Fig. 7 ist das Ventilgehäuse 9IV mit einem durch einen Weichmetallring gebildeten Dichtelement 30 in die Stufenbohrung 3″ (obere Hälfte) bzw. 3‴ (untere Hälfte) eingeschraubt. Das Ventilgehäuse 9IV besitzt am innenliegenden Ende die schon erläuterte Schulter 24 mit der zur Bohrungsachse 4 senkrechten Stützfläche 25. In der Stufenbohrung 3″ ist die Durchmesserstufe 15″ als kegelförmige Fläche ausgebildet. In der unteren Hälfte von Fig. 7 ist hingegen gezeigt, daß die Stufenbohrung 3‴ auch mit einer zur Bohrungsachse 4 senkrechten Durchmesserstufe 15' ausgebildet werden kann, was herstellungstechnisch unter Umständen von Vorteil ist. Bei dieser letztgenannten Ausführungsform wird das Dichtelement 30 in der Stufenbohrung zwischen zwei zur Bohrungsachse 4 senkrechten Stützflächen 25 und 15' niedergespannt. Das freie Ende der Stufenbohrung 3″ oder 3‴ ist mit einer kegeligen Ansenkung 64 versehen, an der ein Außendichtelement 63, das ein Weichmetallring ist, zur Abdichtung anliegt und unter der Anzugsspannung verformt wird. Zu diesem Zweck ist die Auflagefläche 18 des Einschraubkopfes 10 eben ausgebildet. Ferner schließt sich an den Einschraubkopf 10 ein gewindefreier Schaftbereich 62 an, auf dem das Außendichtelement 63 sitzt.

Bei dieser Ausführungsform liegt das Außendichtelement 63 schon an der kegeligen Fläche der Ansenkung 64 an, wenn das Dichtelement 30 noch nicht endgültig niedergespannt ist. Aufgrund der kegeligen Fläche 64 vermag das Außendichtelement 63 eine relativ große axiale Länge zu kompensieren, über die das Ventilgehäuse 9IV eingeschraubt wird, bis das Dichtelement 30 zwischen den Stützflächen 15', 25 im erforderlichen Maß niedergespannt ist. Auf diese Weise werden axiale Herstellungsungenauigkeiten, aufgrund derer der Abstand zwischen der freien Außenfläche 8 des Trägerkörpers 2‴ und der Durchmesserstufe 15 bzw. 15' nicht dem Sollmaß entspricht, primär über das Außendichtelement 62 kompensiert. Liegen beide Dichtelemente 30, 63 an kegeligen Flächen an (obere Hälfte von Fig. 7), dann wird in beiden Bereichen eine Abdichtung mit verhältnismäßig geringer Anzugsspannung erreicht. Ein Nachbearbeiten der Flächen 15, 15', 64 ist ohne weiteres zum Beheben einer Undichtigkeit möglich.

**Patentansprüche**

1. Verbindung zwischen einem Einschraub-Ventilgehäuse (9, 9') und einem metallischen Trägerkörper (2, 2') eines Hochdruck-Hydraulik-Systems, der eine Stufenborhrung (3, 3') für das Ventilgehäuse aufweist, in die wenigstens zwei in Bohrungslängsrichtung durch eine Durchmesserstufe (15, 13) voneinander getrennte Anschlüsse (5, 6, 7) einmünden, wobei in der Stufenbohrung wenigstens zwei zwischen dem Ventilgehäuse und der Borhrungswandung eingespannte Dichtelemente (30, 30') vorgesehen sind, die die Anschlüsse gegeneinander abdichten, **dadurch gekennzeichnet,** daß jedes in der Stufenbohrung (3, 3') sitzende Dichtelement (30, 30') zwischen der Durchmesserstufe (15, 13) und einer Stützfläche (25) des Ventilgehäuses (9, 9') ein durch die Gewindeanzugsspannung des Ventilgehäuses kaltverformter Weichmetallring ist.

2. Verbindung nach Anspruch 1, **dadurch gekennzeichnet,** daß die Weichmetallringe aus Kupfer, Aluminium, Weichensen, Blei oder einem ähnlichen Weichmetall bestehen.

3. Verbindung nach Anspruch 1, **dadurch gekennzeichnet,** daß die Weichmetallringe einen elastischen oder zäh-elastischen Kern (56) und einen diesen zur Gänze umschließenden Weichmetallmantel (57) besitzen.

4. Verbindung nach Anspruch 1, **dadurch gekennzeichnet,** daß die Weichmetallringe Kreisringscheiben, vorzugweise mit quadratischem Ringquerschnitt, sind.

5. Verbindung nach wenigstens einem der Ansprüche 1 bis 4, **dadurch gekennzeichnet,** daß das Material des Trägerkörpers (2, 2') Aluminium, eine Leichtmetallegierung, Gußeisen oder Stahl ist.

6. Verbindung nach wenigstens einem der Ansprüche 1 bis 5, **dadurch gekennzeichnet,** daß jeder Weichmetallring zwischen einer sich in Richtung der Bohrungsachse (4) und zum freien Bohrungsende hin erweiternden Kegelfläche (15, 13) und der zur Bohrungsachse (4) senkrechten Stützfläche (25) eingespannt ist, wobei der Kegelwinkel ca, 120° beträgt.

7. Verbindung nach wenigstens einem der Ansprüche 1 bis 6, **dadurch gekennzeichnet,** daß zwei radial und axial versetzte, koaxiale Weichmetallringe (30, 30') an derselben Durchmesserstufe (15) kaltverformt sind.

8. Verbindung nach Anspruch 7, **dadurch gekennzeichnet,** daß zwischen den Weichmetallringen (30', 30) wenigstens ein Steuerkanal (32) in die Stufenbohrung (3) einmündet.

9. Verbindung nach Anspruch 1, mit einem die Stufenbohrung nach außen abdichtenden, durch die Gewindezugspannung eingespannten Außendichtelement **dadurch gekennzeichnet,** daß das Außendichtelement (63) ein durch einen Schraubkopf (10) des Ventilgehäuses (9') niedergespannter Weichmetallring ist.

10. Verbindung nach Anspruch 9, **dadurch gekennzeichnet,** daß der das Außendichtelement (63) bildende Weichmetallring zwischen einer annähernd zur Bohrungsachse (4) senkrechten Auflagefläche (18) des Schraubkopfes (10) und einer zur Bohrungsachse (4) senkrechten Stützfläche (8) am freien Ende der Stufenbohrung (3) eingeklemmt ist.

11. Verbindung nach Ansprüch 9, **dadurch gekennzeichnet,** daß der Weichmetallring unter dem Schraubkopf (10) zwischen einer kegeligen Stützfläche (64) und einer zur Bohrungsachse (4) senkrechten Stützfläche (18) eingeklemmt ist, und daß jeder Weichmetallring in der Stufenbohrung zwischen zwei senkrecht zur Bohrungslängsachse (4) liegenden Stützflächen (25) zusammengepreßt wird.

12. Verbindung nach Anspruch 6, **dadurch gekennzeichnet,** daß der Weichmetallring am Ventilgehäuse (9, 9') an einer Schulter (24) gehalten ist, die durch die zur Borhrungsachse (4) senkrechte Stützfläche (25) und eine in Gewindeanzugsrichtung schwach kegelförmig verjüngte Umfangsfläche (26) begrenzt wird, und daß zwischen der Stützfläche (25) und der Umfangsfläche (26) eine schmale umlaufende Nut (27) vorgesehen ist.

13. Verbindung nach Anspruch 1, mit einem die Stufenbohrung nach außen abdichtenden, durch die Gewindeanzugsspannung eingespannten Außendichtelement, **dadurch gekennzeichnet,** daß das Aubendichtelement (19) eine umlaufende Schneidkante an der Auflagefläche (18) eines Einschraubkopfes (10) des Gehäuses (9, 9') ist, die unter der Anzugsspannung des Ventilgehäuses (9, 9') in die Auflagefläche (8) um das freie Ende der Stufenbohrung (3) einschneidet.

14. Verbindung nach Anspruch 8, **dadurch gekennzeichnet,** daß im Ventilgehäuse (9') ein vorgesteuertes und zusätzlich hydraulisch entlasbares Sicherheits-Sitzventil (47, 49) untergebracht ist, das den Druck in einem die Stufenbohrung (3) verlängernden Kanal (5) überwacht und bei Drucküberschreitung zu einem durch die Weichmetallringe (30, 30') vom Kanal (5) getrennten, seitlichen Anschlußkanal (6) öffnet, und daß ein Entlastungskanal (50) im Ventilgehäuse (9') in eine zwischen den Weichmetallringen (30, 30') begrenzte Ringkammer (55) mündet, die an den im Trägerkörper (2') in der Durchmesserstufe (15) mündenden, zum Entlasten des Sicherheits-Sitzventils (47, 49) durchgängigen Steuerkanal (32) angeschlossen ist.

## Claims

1. Union between a screw-in valve body (9, 9') and a metallic bearing member (2, 2') of a high-pressure hydraulic system, which member comprises a stepped bore (3, 3') for the valve body, into which bore at least two connections (5, 6, 7) lead, which connections are separated from one another in the longitudinal direction of the bore by a diametral step (15, 13), at least two sealing members (30, 30'), which are gripped between the valve body and the bore wall, being provided in the stepped bore, which members seal off the connections from one another, characterised in that each sealing member (30, 30') mounted in the stepped bore (3, 3') is a soft metal ring which is cold-worked by the thread tightening tension of the valve body between the diametral step (15, 13) and a support surface (25) of the valve body (9, 9').

2. Union according to claim 1, characterised in that the soft metal rings consist of copper, aluminium, soft iron, lead or a similar soft metal.

3. Union according to claim 1, characterised in that the soft metal rings comprise an elastic or viscoelastic core (56) and a soft metal shell (57) which completely surrounds the latter.

4. Union according to claim 1, characterised in that the soft metal rings are circular rings discs, preferably with a square ring cross section.

5. Union according to at least one of claims 1 to 4, characterised in that the material of the bearing member (2, 2') is aluminium, a light metal alloy, cast iron or steel.

6. Union according to at least one of claims 1 to 5, characterised in that each soft metal ring is gripped between a conical surface (15, 13), which widens in the direction of the bore axis (4) and towards the free bore end, and the support surface (25), which is perpendicular to the bore axis (4), the cone angle being approximately 120°.

7. Union according to at least one of claims 1 to 6, characterised in that two radially and axially staggered, coaxial soft metal rings (30, 30') are cold-worked at the same diametral step (15).

8. Union according to claim 7, characterised in that at least one control channel (32) leads into the stepped bore (3) between the soft metal rings (30', 30).

9. Union according to claim 1, with an external sealing member which externally seals off the stepped bore and is gripped by the thread tension, characterised in that the external sealing member (63) is a soft metal ring which is held down by a screwed head (10) of the valve body (9').

10. Union according to claim 9, characterised in that the soft metal ring which forms the external sealing member (63) is gripped between a contact surface (18), which is approximately perpendicular to the bore axis (4), of the screwed head (10) and a support surface (8), which is perpendicular to the bore axis (4), at the free end of the stepped bore (3).

11. Union according to claim 9, characterised in that the soft metal ring is gripped under the screwed head (10) between a conical support surface (64) and a support surface (18), which is perpendicular to the bore axis (4), and that each soft metal ring in the stepped bore is compressed between two support surfaces (25), which are perpendicular to the longitudinal axis (4) of the bore.

12. Union according to claim 6, characterised in that the soft metal ring is held against the valve body (9, 9′) at a shoulder (24), which is defined by the support surface (25), which is perpendicular to the bore axis (4), and a circumferential surface (26), which tapers slightly in the thread tightening direction, and that a narrow circulating groove (26) is provided between the support surface (25) and the circumferential surface (26).

13. Union according to claim 1, with an external sealing member which externally seals off the stepped bore and is gripped by the thread tightening tension, characterised in that the external sealing member (19) is a circulating cutting edge at the contact surface (18) of a screwed head (10) of the body (9, 9′), which edge cuts into the contact surface (8) around the free end of the stepped bore (3) under the tightening tension of the valve body (9, 9′).

14. Union according to claim 8, characterised in that a pilot-controlled seated relief valve (47, 49), which can additionally be hydraulically balanced, is accommodated in the valve body (9′), which valve monitors the pressure in a channel (5), which extends the stepped bore (3), and opens towards a lateral connecting channel (6), which is separated from the channel (5) by the soft metal rings (30, 30′), when an excess pressure occurs, and that a balancing channel (50) in the valve body (9′) leads into an annular chamber (55), which is defined between the soft metal rings (30, 30′) and communicates with the control channel (32), which ends at the diametral step (15) in the bearing member (2′) and is open to balance the seated relief valve (47, 49).

## Revendications

1. - Liaison entre un carter de soupape vissé (9, 9′) et un corps porteur métallique (2, 2′) d'un système hydraulique à haute pression lequel corps porteur présente un alésage étagé (3, 3′) pour le carter de soupape dans lequel débouchent au moins deux raccordements (5, 6, 7) séparés les uns des autres dans le sens longitudinal de l'alésage par un étagement de diamètres (15, 13), dans l'alésage étagé étant prévus au moins deux éléments d'étanchéité (30, 30′) insérés entre le carter de soupape et la paroi de l'alésage et assurant l'étanchement des raccordements les uns par rapport aux autres, **caractérisée en ce** que chaque élément d'étanchéité (30, 30′) placé dans l'alésage étagé (3, 3′) est constitué par un anneau en métal doux déformé à froid entre l'étagement de diamètres (15, 13) et une surface d'appui (25) du carter de soupape (9, 9′) par la force de serrage du carter de soupape.

2. - Liaison selon la revendication 1, caractérisée en ce que les anneaux en métal doux sont réalisés en cuivre, aluminium, plomb ou un métal doux analogue.

3. - Liaison selon la revendication 1, caractérisée en ce que les anneaux en métal doux comportent un noyau (56) élastique ou viscoplastique et une enveloppe en métal doux (57) qui enveloppe entièrement ledit noyau.

4. - Liaison selon la revendication 1, caractérisée en ce que les anneaux en métal doux sont constitués par des disques en anneau de cercle dont la section transversale de l'anneau présente de préférence une forme carrée.

5. - Liaison selon au moins l'une des revendications 1 à 4, caractérisée en ce que le corps porteur (2, 2′) est réalisé en aluminium, en un alliage léger, en fonte ou en acier.

6. - Liaison selon au moins l'une des revendications 1 à 5, caractérisée en ce que chaque anneau en métal doux est enserré entre une surface conique (15, 13) qui s'élargit en direction de l'axe (4) et de l'extrémité libre de l'alésage, et la surface d'appui (25) orientée perpendiculairement à l'axe (4) de l'alésage, l'angle de cône étant d'environ 120°.

7. - Liaison selon au moins l'une des revendications 1 à 6, caractérisée en ce que deux anneaux en métal doux (30, 30′) coaxiaux décalés l'un par rapport à l'autre dans les sens radial et axial sont déformés à froid sur le même étagement de diamètres (15).

8. - Liaison selon la revendication 7, caractérisée en ce qu'au moins un canal de commande (32) débouche dans l'alésage étagé (3) entre les anneaux en métal doux (30′ 30).

9. - Liaison selon la revendication 1, comprenant un élément d'étanchéité extérieur enserré par la force de serrage du filetage et assurant l'étanchéité de l'alésage étagé vers l'extérieur, caractérisée en ce que l'élément d'étanchéité extérieur (63) est constitué par un anneau en métal doux enserré par une tête de vissage (10) du carter de soupape (9′).

10. - Liaison selon la revendication 9, caractérisée en ce que l'anneau en métal doux formant l'élément d'étanchéité extérieur (63) est enserré entre une surface d'appui (18) de la tête de vissage (10) orientée sensiblement perpendiculairement à l'axe (4) de l'alésage, et une surface d'appui (8) à l'extrémité libre de l'alésage étagé (3) perpendiculaire à l'axe (4) de l'alésage.

11. - Liaison selon la revendication 9, caractérisée en ce que l'anneau en métal doux est enserré sous la tête de vissage (10) entre une surface d'appui conique (64) et une surface d'appui (18) perpendiculaire à l'axe (4) de l'alésage, et que chaque anneau en métal doux est comprimé dans l'alésage étagé entre deux surfaces d'appui (25) placées perpendiculairement à l'axe (4) de l'alésage.

12. - Liaison selon la revendication 6, caractérisée en ce que l'anneau en métal doux sur le carter de soupape (9, 9′) est maintenu sur un épaulement (24) qui est délimité par la surface d'appui (25) perpendiculaire à l'axe (4) de l'alésage et par une surface circonférentielle (26) légèrement rétrécie de manière conique dans la direction de la force de serrage du filetage, et qu'une étroite gorge circulaire (27) est prévue entre la surface d'appui (25) et la surface circonférentielle (26).

13. - Liaison selon la revendication 1, comprenant un élément d'étanchéité extérieur enserré par la force de serrage du filetage et assurant l'étanchéité de l'alésage étagé vers l'extérieur, caractérisée en ce que l'élément d'étanchéité extérieur (19) est constitué par une arête de coup circulaire sur la surface d'appui (18) d'une tête de vissage (10) du carter de soupape (9, 9′) qui, sous l'action de la force de serrage du carter de soupape (9, 9′) se creuse dans la surface d'appui (8) autour de l'extrémité libre de l'alésage étagé (3).

14. - Liaison selon la revendication 8, caractérisée en ce que dans le carter de soupape (9′) est logée une soupape de sûreté à siège (47, 49) à commande pilote et décharge hydraulique supplémentaire qui surveille la pression dans un canal (5) prolongeant l'alésage étagé (3) et s'ouvre, en cas de dépassement de pression, en direction d'un canal de raccordement latéral (6) séparé du canal (5) par les anneaux en métal doux (30, 30′), et qu'un canal de décharge (50) dans le carter de soupape (9′) débouche dans une chambre annulaire (55) délimitée entre les anneaux en métal doux (30, 30') et raccordée au canal de commande (32) ouvert pour la décharge de la soupape de sûreté à siège (47, 49) et débouchant dans le corps porteur 2′ dans l'étagement de diamètres (15).

**FIG.1**

**FIG.2**

FIG.3

FIG.4

FIG.5

FIG.6

FIG.7